(19) Europäisches Patentamt / European Patent Office / Office européen des brevets

(11) **EP 3 698 969 B1**

(12) # EUROPÄISCHE PATENTSCHRIFT

(45) Veröffentlichungstag und Bekanntmachung des Hinweises auf die Patenterteilung:
**20.04.2022   Patentblatt 2022/16**

(21) Anmeldenummer: **19158348.3**

(22) Anmeldetag: **20.02.2019**

(51) Internationale Patentklassifikation (IPC):
**B41F 13/08** *(2006.01)*      **B41F 13/10** *(2006.01)*
**B41F 27/10** *(2006.01)*      **B41F 27/14** *(2006.01)*

(52) Gemeinsame Patentklassifikation (CPC):
**B41F 13/085; B41F 13/10; B41F 27/105;**
**B41F 27/14;** B41P 2200/12; B41P 2227/20

(54) **SCHWINGUNGSARMER ZYLINDER**

LOW-VIBRATION CYLINDER

CYLINDRE À FAIBLES VIBRATIONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**26.08.2020   Patentblatt 2020/35**

(73) Patentinhaber: **Flint Group Germany GmbH 70469 Stuttgart (DE)**

(72) Erfinder:
• **Schwiertz, Martin 48488 Emsbüren (DE)**
• **Müller, Uwe 48683 Ahaus (DE)**
• **Bennink, Klaus 48691 Vreden (DE)**

(74) Vertreter: **Arnold & Siedsma Bezuidenhoutseweg 57 2594 AC The Hague (NL)**

(56) Entgegenhaltungen:
**EP-A2- 0 313 511     EP-B1- 1 263 592 WO-A1-99/36270**

**Beschreibung**

Die Erfindung betrifft einen Zylinder, der zum Aufbringen von mindestens einem

Hohlzylinder eingerichtet ist und eine Schichtstruktur mit einer harten Deckschicht umfasst, wobei die harte Deckschicht eine Mantelfläche des Zylinders bildet.

Des Weiteren betrifft die Erfindung Anordnungen umfassend mindestens zwei solcher Zylinder.


Stand der Technik

Flexodruck ist ein Hochdruckverfahren, bei dem eine dünnflüssige Druckfarbe von den erhabenen Stellen der Druckform auf ein Substrat übertragen wird. Der Flexodruck zeichnet sich durch die Verwendung weichelastischer Druckformen aus, wodurch eine Vielzahl von Substraten (Papier, Karton, Folien) bedruckt werden können. Neben dem Offsetdruck und dem Tiefdruck zählt der Flexodruck zu den wichtigsten Druckverfahren in der Verpackungsindustrie.

Bei den Flexodruckmaschinen unterscheidet man Mehrzylinder- und Zentralzylinderdruckmaschinen. Bei einer Zentralzylinderdruckmaschine sind die einzelnen Druckwerke um einen Zentralzylinder herum angeordnet, über den die Substratbahn geführt wird. Bei Mehrzylinderdruckmaschinen sind die einzelnen Druckwerke hintereinander angeordnet. Die Druckwerke bestehen aus dem Druckformzylinder, einer Rasterwalze zum Einfärben der Druckform sowie einer Farbwanne aus der die Druckfarbe auf die Rasterwalze gelangt. Im einfachsten Fall besteht der Druckformzylinder aus einer Stahlwalze, auf den die Flexodruckform aufgeklebt wird.

Ein großer Vorteil des Flexodrucks gegenüber anderen Druckverfahren ist dessen Formatvariabilität. Durch Verwendung von Stahlzylindern als Druckformzylinder mit unterschiedlichem Durchmesser können verschiedene Formate gedruckt werden. Der Fachmann spricht von der sogenannten Rapportlänge. Die Rapportlänge entspricht der Drucklänge bei einer vollständigen Umdrehung des Druckformzylinders. Allerdings ist der Austausch der schweren Stahlzylinder zeitaufwändig. Deshalb werden heute Flexodruckmaschinen angeboten, bei denen die Rapportlänge durch Adapterhülsen einfacher verändert werden kann. Die Adapterhülse wird auf den Stahlzylinder aufgeschoben. Die Wandstärken üblicher Adapterhülsen reichen von 7 mm bis 300 mm. Auf die Adapterhülse wird anschließend eine Druckhülse aufgeschoben, auf der sich die meist vormontierte Druckform befindet. Adapter- bzw. Druckhülsen werden heute allgemein auch als Sleeves bezeichnet. Sleeves sind aus Kunststoff gefertigt. Sie sind bedeutend leichter als entsprechende Stahlzylinder und können daher viel einfacher in der Druckmaschine ausgetauscht werden.

Ein Sleeve ist meist wie folgt aufgebaut (von innen nach außen):
Auf einer dünnen Schicht aus GFK-Material (GFK = Glasfaser verstärkter Kunststoff) befindet sich eine dünne kompressible Schicht, die wiederum von einer zweiten dünnen Schicht aus GFK-Material bedeckt ist. Dieser Schichtverbund macht die Sleeves mittels Druckluft expandierbar und wird im Folgenden als GFK-Basishülse bezeichnet. Üblicherweise hat die GFK-Basishülse eine Dicke von 1 mm bis zu 4 mm. Auf die GFK-Basishülse wird eine einige mm bis einige cm dicke Polyurethanschaumschicht aufgebracht. Diese Schicht dient zum Aufbau der Schichtdicke bzw. zur Realisierung der gewünschten Rapportlänge. Meist befindet sich auf der Polyurethanschaumschicht eine weitere dünne GFK-Schicht bzw. eine dünne Deckschicht, um die mechanische und chemische Stabilität des Sleeves zu gewährleisten.

Um ein einfaches Aufschieben der Adapterhülse sicherzustellen, können die Druckformzylinder Luftbohrungen aufweisen, aus denen Druckluft strömt. Durch die Druckluft baut sich ein Luftpolster auf, wodurch der innere Durchmesser der Adapterhülse aufgeweitet wird und die Adapterhülse über den Druckformzylinder gleitet. Stoppt man die Luftzufuhr, klemmt die Adapterhülse auf dem Druckformzylinder und ist auf diesem fest fixiert.

Damit auf die Adapterhülse der Drucksleeve aufgezogen werden kann, enthält die Adapterhülse üblicherweise ebenfalls ein Luftleitsystem. Hier sind im Stand der Technik zwei Systeme bekannt. Die Druckluft wird entweder direkt vom Druckformzylinder weitergeleitet (Bridgesystem) oder es existiert ein separater Luftanschluss an einer der Stirnseiten der Adapterhülse (Airo-System).

Beim Bridgesystem hat der Adapter Luftkanäle, die von der Innenseite Adapterhülse an die Außenseite der Adapterhülse reichen, so dass die aus dem Druckformzylinder austretende Druckluft auch ein Luftpolster über der Adapterhülse erzeugen kann. Eine Adapterhülse nach dem Bridgesystem ist aus EP 1 263 592 B1 bekannt.

Um hohe Druckgeschwindigkeiten ohne Beeinträchtigung des Druckbildes zu erzielen, sollten Schwingungen der Zylinder während des Druckvorgangs so gering wie möglich ausfallen. Dazu sollte der Zylinder gute Dämpfungseigenschaften aufweisen. Die Schwingungs- und Dämpfungseigenschaften eines Zylinders sind insbesondere von dessen Masse und den physikalischen Eigenschaften der verwendeten Materialien abhängig. Insbesondere hat das E-Modul einen Einfluss auf den Widerstand, den ein Material einer Verformung entgegensetzt und damit einen Einfluss auf Dämpfungseigenschaften dieses Materials.

Aus WO 2017/089221 A1 ist eine Hülse bekannt, welche eine formstabile und flüssigkeitsundurchlässige äußere Schicht und mehrere innere Schichten aufweist. Die inneren Schichten umfassen als innerste Schicht eine Basisschicht basierend auf einem mit Glasfasern verstärkten Kunststoff, eine kompressible Schicht und eine Aufbauschicht. Die Hülse weist zusätzlich an den Stirnseiten einen Ring aus einem flüssigkeitsundurchlässigen Material auf, mit dem die Stirnseiten abgeschlossen sind.

DE 10 2014 220 850 A1 beschreibt eine Druckhülse, welche eine innere Schicht und eine äußere Schicht aufweist, welche direkt mit der inneren Schicht in Kontakt steht. Die innere Schicht ist eine glasfaserverstärkte kompressible Schicht. Die Außenseite der äußeren Schicht ist als Druckoberfläche ausgebildet.

EP 3 189 976 A2 offenbart eine Druckhülse mit einer Basisschicht aus einem dehnbaren Material, eine mit schmelzbaren Polymerseilen verstärkte Schicht und eine Druckoberflächenschicht. Während einer Wärmebehandlung werden die schmelzbaren Polymerseile geschmolzen. Zusätzlich können nicht-schmelzbare Seile in die verstärkte Schicht eingebettet sein und es kann zwischen der Basisschicht und der verstärkten Schicht eine weitere Schicht angeordnet sein, welche nicht-schmelzende Seile enthält.

Aus EP 2051856 ist eine Adapterhülse mit integriertem Gaskanal bekannt. Die Adapterhülse weist eine Basisschicht, eine Verstärkungsschicht, eine Barriereschicht und eine Oberflächenschicht auf. Die Basisschicht kann aus einem Metall oder einem Polymer hergestellt sein. Die Verstärkungsschicht ist eine geschäumte Polyurethanschicht, in die der Gaskanal integriert ist. Die Barriereschicht kann als ein faserverstärktes Polymermaterial ausgeführt sein. Die Oberflächenschicht umfasst ein Polymer wie Polyurethan.

Aus WO 2005/110751 A1 und WO 2005/111725 A1 sind Druckhülsen bekannt, welche eine Basishülse, eine Polsterschicht, eine Barriereschicht und eine photopolymerisierbare Schicht aufweisen. Die Basishülse und die Polsterschicht sind dabei für Strahlung transparent, welche zum Aushärten der photopolymerisierbaren Schicht geeignet ist.

US 2004/0103976 A1 beschreibt eine Druckhülse mit einer faserverstärkten dünnwandigen Basishülse, eine drauf angeordneten kompressiblen Schicht und einer bebilderbaren Schicht.

Aus WO99/36270 und US 5,860,360 sind Hülsen bekannt, welche eine innere Polymerschicht, eine Fasern aufweisende Verstärkungsschicht, eine zwischen-Polymerschicht, eine Polsterschicht und eine äußere Polymerschicht aufweisen. Die innere Polymerschicht weist eine Härte im Bereich von 65 bis 90 Shore A auf. Die Polsterschicht weist eine Härte im Bereich von 25 bis 55 Shore A auf. Zwischen den einzelnen Schichten können zusätzliche Klebstoffschichten angeordnet sein.

Offenbarung der Erfindung

Die vorliegende Erfindung ist durch die Merkmale des unabhängigen Anspruchs 1 definiert.

Vorteilhafte Weiterbildungen der Erfindung sind Gegenstand der abhängigen Ansprüche.

Es wird erfindungsgemäß ein Zylinder vorgeschlagen, der eingerichtet ist zum Aufbringen von mindestens einem Hohlzylinder, wobei der Zylinder eine Schichtstruktur aufweist, die in dieser Reihenfolge von innen nach außen eine Basisschicht oder einen Zylinderkern, eine erste kompressible Schicht, eine Füllschicht, eine Zwischenschicht, eine zweite kompressible Schicht und eine Deckschicht umfasst, wobei die Deckschicht eine Mantelfläche des Zylinders bildet.

Der Zylinder kann als Vollzylinder oder als Hohlzylinder ausgestaltet sein.

Bei Ausgestaltung als Vollzylinder umfasst der Zylinder einen Zylinderkern, auf dem die weiteren Schichten der Schichtstruktur des Zylinders angeordnet sind. Der Zylinderkern kann massiv ausgeführt sein oder alternativ auch Hohlräume aufweisen.

Bei Ausgestaltung als Hohlzylinder weist der Zylinder als innerste Schicht die Basisschicht auf, auf der die weiteren Schichten der Schichtstruktur des Zylinders angeordnet sind.

Der Zylinder kann als ein Druckformzylinder ausgestaltet sein. Der Druckformzylinder kann je nach Ausführungsform als Hohlzylinder oder als Vollzylinder ausgestaltet sein und ist insbesondere zur Aufnahme von Druckhülsen und/oder Adapterhülsen auf der Mantelfläche des Druckformzylinders eingerichtet.

Der Zylinder kann als Adapterhülse oder als Druckhülse ausgestaltet sein. In diesem Fall ist der Zylinder meist ein Hohlzylinder, wobei die Basisschicht eine Innenseite aufweist, die den Hohlzylinder begrenzt. Die Druckhülse ist bevorzugt eine flexographische oder lithographische Druckhülse. Die Deckschicht der Druckhülse ist dabei insbesondere dazu eingerichtet bzw. dazu geeignet, dass eine Druckplatte auf die Deckschicht aufgeklebt werden kann.

Bevorzugt weist der Zylinder mindestens eine weitere Zwischenschicht auf, wobei die mindestens eine weitere Zwischenschicht zwischen der ersten kompressiblen Schicht und der Füllschicht und/oder zwischen der zweiten kompressiblen Schicht und der Deckschicht angeordnet ist.

Der Zylinder kann somit beispielsweise einen Schichtstruktur aufweisen, die in dieser Reihenfolge von innen nach außen die Basisschicht oder den Zylinderkern, die erste kompressible Schicht, eine erste weitere Zwischenschicht, die Füllschicht, die Zwischenschicht, die zweite kompressible Schicht, eine zweite weitere Zwischenschicht und die harte Deckschicht umfasst.

Der Zylinder kann mindestens einen in seinem Inneren angeordneten Kanal umfassen, welcher mit Öffnungen auf der Mantelfläche des Zylinders, und/oder mit Öffnungen oder Anschlüssen an einer Stirnseite des Zylinders, und/oder, falls der Zylinder als ein Hohlzylinder mit einer Basisschicht ausgebildet ist, mit Öffnungen an einer Innenseite oder an einer Stirnseite des Hohlzylinders verbunden ist. Der mindestens eine Kanal ist dabei bevorzugt parallel zur Zylinderachse angeordnet.

Beispielsweise umfasst ein als Vollzylinder ausgestalteter Zylinder an einer Stirnseite einen Anschluss für Druckluft, der über den mindestens einen Kanal mit Öffnungen auf der Mantelfläche des Zylinders verbunden ist. Ein solcher Zylinder kann insbesondere als Druckformzylinder ausgestaltet sein. Die an der Mantelfläche austretende Druckluft, erleichtert die Montage eines oder mehrerer Hohlzylinder, beispielsweise von einer weiteren Adapterhülse oder von einer Druckhülse. Die Öffnungen in der Mantelfläche können in Form von einer oder mehreren runden, schlitzförmigen oder eckigen Öffnungen in der Deckschicht oder als poröses Material oder als ein Material mit einem hohen Anteil an Öffnungen ausgebildet sein

Bei einem als Hohlzylinder ausgestalteten Zylinder kann dieser beispielsweise an seiner Innenseite Öffnungen aufweisen, welche über den mindestens einen Kanal mit Öffnungen auf der außenliegenden Mantelfläche des Zylinders verbunden sind. Die Öffnungen auf der Innenseite des Hohlzylinders können als Gaseinlass dienen. Von einem Druckformzylinder zur Verfügung gestellte Druckluft kann auf diese Weise zu den Öffnungen auf der Außenseite geleitet werden. Ein solcher Hohlzylinder kann insbesondere als Adapterhülse ausgestaltet sein

Der Gaseinlass bzw. die Öffnungen an der Innenseite des Hohlzylinders kann dabei in Form von einer oder mehreren runden, schlitzförmigen oder eckigen Öffnungen in der Basisschicht oder als poröses Material oder als ein Material mit einem hohen Anteil an Öffnungen ausgebildet sein. Der Gaseinlass befindet sich dabei entlang der Längsrichtung der Adapterhülse gesehen bevorzugt im ersten Drittel einer Seite der Adapterhülse und diese Seite ist vorzugsweise die einem Bediener zugewandte Seite.

Wird Druckluft an die Oberfläche der Außenseite der Adapterhülse geleitet, erleichtert dies die Montage eines oder mehrerer weiterer Hohlzylinder, beispielsweise von einer weiteren Adapterhülse oder von einer Druckhülse. Die Öffnungen an der Außenseite der Adapterhülse können beispielsweise in Form von einer oder mehreren runden, schlitzförmigen oder eckigen Öffnungen in der Deckschicht oder als poröses Material oder als ein Material mit einem hohen Anteil an Öffnungen ausgebildet sein

Um einen Bereich porös und gasdurchlässig auszugestalten, können sowohl poröse Materialien als auch Materialien mit einem hohen Anteil an Öffnungen pro Fläche verwendet werden. Derartige Materialien können siebartige, rechenartige, lamellenartige oder schlitzförmige Öffnungen aufweisen.

Der mindestens eine Kanal kann in der Füllschicht angeordnet sein. Dabei kann der Kanal beispielsweise in Form einer Bohrung oder eines Schlitzes in der Füllschicht ausgebildet sein und bevorzugt axial, also parallel zu der Achse des Zylinders verlaufen. Des Weiteren kann der Kanal in Form eines Schlauchs ausgestaltet sein, der in die Füllschicht eingebettet ist. In weiteren Ausführungsformen kann der mindestens eine Kanal auch in einer oder mehreren der anderen Schichten des Zylinders angeordnet sein. Zum Verbinden des Kanals mit Öffnungen des Zylinders können eine oder mehrere radiale Bohrungen vorgesehen sein.

Der Zylinder weist eine Schichtstruktur mit mehreren Schichten auf, welche im Folgenden erläutert werden.

Basisschicht / Zwischenschicht(en)

Die Basisschicht schließt den Zylinder bei Ausgestaltung des Zylinders zur Innenseite ab. Die Basisschicht gibt dem Zylinder Stabilität und stellt die Grundlage für das Aufbringen weiterer Schichten des Schichtaufbaus dar. Im Fall einer Ausführung als Vollzylinder wird anstelle einer Basisschicht ein Zylinderkern verwendet.

Das Material der Basisschicht, der Zwischenschicht und/oder der mindestens einen weiteren Zwischenschicht ist bevorzugt ein faserverstärkter Kunststoff.

Dabei ist der Kunststoff bevorzugt ausgewählt ist aus der Gruppe umfassend Polyester, Polyamide, Polyurethane, Epoxide, Phenolharze, ungesättigte Polyesterharze, Vinylesterharze, Phenol-Formaldehydharze, Diallylphthalatharze, (Meth)Acrylatharze, Aminoharze, Melaminharze, Harnstoffharze und Kombinationen davon.

Die zur Verstärkung des Kunststoffs verwendeten Fasern sind bevorzugt ausgewählt aus der Gruppe umfassend Glasfasern, Keramikfasern, Kohlenstofffasern und Kombinationen davon.

Geeignet sind insbesondere Fasern mit einem Zug-E-Modul von mindestens 50 GPa, wobei übliche für die Verstärkung von Kunststoffen eingesetzte Fasern ein Zug-E-Modul im Bereich von ca. 60 GPa bis etwa 700 GPa aufweisen.

Beispiele für geeignete Kunststofffasern sind insbesondere Polyamidfasern, Polyaramidfasern, Polyimidfasern, Polyethylenfasern und Polyurethanfasern.

Die Basisschicht, die Zwischenschicht und/oder die mindestens eine weitere Zwischenschicht weisen bevorzugt eine Dicke im Bereich von 0,5 mm bis 5 mm auf. Besonders bevorzugt liegt die Dicke im Bereich von 0,7 mm bis 4 mm, ganz besonders bevorzugt im Bereich von 0,9 mm bis 4 mm und am meisten bevorzugt im Bereich von 1 mm bis 2 mm.

Die Dicke der Basisschicht beträgt insbesondere bei Ausgestaltung des Zylinders als Adapterhülse oder als Druckhülse bevorzugt weniger als 1 mm. Hierdurch wird erreicht, dass die Basisschicht durch Einwirkung einer Kraft, beispielsweise durch Druckluft, expandiert werden kann. Durch das Expandieren der Basisschicht vergrößert sich der Innendurchmesser des Holzylinders, so dass ein Aufschieben auf einer anderen Adapterhülse oder einen Druckformzylinder vorteilhaft erleichtert wird.

Die Basisschicht, die Zwischenschicht und/oder die mindestens eine weitere Zwischenschicht weist bevorzugt eine Härte im Bereich von 60 Shore D bis 99 Shore D auf. Besonders bevorzugt liegt die Härte im Bereich von 65 Shore D bis 95 Shore D, ganz besonders bevorzugt im Bereich von 70 Shore D bis 95 Shore D und am meisten bevorzugt im Bereich von 80 Shore D bis 95 Shore D.

Die Basisschicht, die Zwischenschicht und/oder die mindestens eine weitere Zwischenschicht weist bevorzugt ein Elastizitätsmodul im Bereich von 10 GPa bis 1000 GPa auf. Das Elastizitätsmodul liegt besonders bevorzugt im Bereich von 20 GPa bis 900 GPa, ganz besonders bevorzugt im Bereich von 30 GPa bis 800 GPa und am meisten bevorzugt im Bereich von 40 GPa bis 640 GPa. Die Angabe zum Elastizitätsmodul bezieht sich dabei auf eine Messung entlang einer Richtung, die im Wesentlichen der Ausrichtung der Fasern in dem Kunststoff entspricht.

Die Basisschicht, die Zwischenschicht und/oder die mindestens eine weitere Zwischenschicht weist bevorzugt eine Dichte im Bereich von 0,9 g/cm$^3$ bis 3 g/cm$^3$ auf. Besonders bevorzugt liegt die Dichte im Bereich von 1 g/cm$^3$ bis 2,8 g/cm$^3$, ganz besonders bevorzugt im Bereich von 1,1 g/cm$^3$ bis 2,4 g/cm$^3$ und am meisten bevorzugt im Bereich von 1,1 g/cm$^3$ bis 2,1 g/cm$^3$.

Zylinderkern

Wird der Zylinder als Vollzylinder ausgeführt, bildet der Zylinderkern die Basis für die weiteren Schichten der Schichtstruktur des Zylinders aus. Der Zylinderkern kann massiv ausgeführt sein oder alternativ auch Hohlräume aufweisen.

Als Materialien für den Zylinderkern sind beispielsweise faserverstärkte Werkstoffe, Stahl, Edelstahl, Kupfer, Aluminium, Chrom, deren Legierungen bzw. Verbünde, oder Kombinationen davon. geeignet.

Erste/zweite kompressible Schicht

Die kompressiblen Schichten in dem Zylinder ermöglichen es dem Zylinder Druckkräfte aufzunehmen, welche auf den Zylinder einwirken. Des Weiteren wirken die kompressiblen Schichten dämpfend auf Schwingungen des Zylinders. Die erste kompressible Schicht dient insbesondere dazu, Ausdehnungen der darunterliegenden Schichten zu kompensieren.

Bevorzugt ist das Material der ersten kompressiblen Schicht und/oder der zweiten kompressible Schicht ausgewählt aus der Gruppe umfassend elastische Vollmaterialien, elastische Schäume, mit Hohlkugeln gefüllte Materialien und Kombinationen dieser Materialien.

Das elastische Material ist beispielsweise ausgewählt ist aus einem Kautschuk, einem Gummi, einem Ethylen-Propylen-Dien-Kautschuk, einem Styrol-Butadien-Copolymer, einem Styrol-Isopren-Copolymer, einem Polyurethan, einem Polyether-Amid, einem Silikon-Kautschuk oder Kombinationen davon. Ein Beispiel für ein geeignetes Gummi ist Polyester-Urethan-Kautschuk. Der elastische Schaum ist beispielsweise ausgewählt ist aus der Gruppe umfassend Polyurethanschaum, Polyester-Urethan Schaum, Epoxid-Schaum, Silikon-Schaum und Kombinationen mehrerer dieser Schäume.

Bevorzugt weist die erste kompressible Schicht und/oder die zweite kompressible Schicht eine Dicke im Bereich von 0,1 mm bis 10 mm auf. Besonders bevorzugt liegt die Dicke im Bereich von 0,5 mm bis 4 mm, ganz besonders bevorzugt im Bereich von 0,7 mm bis 4 mm und am meisten bevorzugt im Bereich von 1 mm bis 3,5 mm.

Die erste kompressible Schicht und/oder die zweite kompressible Schicht weist bevorzugt eine Härte im Bereich von 15 Shore A bis 80 Shore A auf. Besonders bevorzugt liegt die Härte im Bereich von 10 Shore A bis 70 Shore A, ganz besonders bevorzugt im Bereich von 25 Shore A bis 60 Shore A und am meisten bevorzugt im Bereich von 25 Shore A bis 50 Shore A aufweist.

Die erste kompressible Schicht und/oder die zweite kompressible Schicht weist bevorzugt eine Dichte im Bereich von 0,1 g/cm$^3$ bis 1,2 g/cm$^3$ auf. Besonders bevorzugt liegt die Dichte im Bereich von 0,1 g/cm$^3$ bis 1,1 g/cm$^3$, ganz besonders bevorzugt im Bereich von 0,1 g/cm$^3$ bis 1 g/cm$^3$ und am meisten bevorzugt im Bereich von 0,2 g/cm$^3$ bis 0,9 g/cm$^3$.

Die erste kompressible Schicht und/oder die zweite kompressible Schicht weist bevorzugt das geringste Elastizitätsmodul aller Schichten des Zylinders auf.

Füllschicht

Die Füllschicht des Zylinders kann verwendet werden, um den Außendurchmesser des Zylinders auf einen vorgegebenen Wert einzustellen. Wird ein großer Zylinderdurchmesser benötigt, kann die Dicke der Füllschicht entsprechend vergrößert werden und umgekehrt kann die Dicke der Füllschicht reduziert werden, wenn ein geringer Zylinderdurchmesser erforderlich ist.

Das Material der Füllschicht ist bevorzugt ein Hartschaum.

Die Füllschicht weist bevorzugt eine Dichte im Bereich von 0,05 g/cm$^3$ bis 0,8 g/cm$^3$ auf. Besonders bevorzugt liegt die Dichte im Bereich von 0,1 g/cm$^3$ bis 0,8 g/cm$^3$, ganz besonders bevorzugt im Bereich von 0,1 g/cm$^3$ bis 0,7 g/cm$^3$ und am meisten bevorzugt im Bereich von 0,2 g/cm$^3$ bis 0,6 g/cm$^3$.

Der Hartschaum ist bevorzugt ein Polyurethanschaum, ein Epoxidschaum, ein Silikonschaum, ein Polyethylenschaum, ein Polystyrolschaum, ein Polyethylenterephthalatschaum. Der Hartschaum weist bevorzugt eine geringe Dichte auf, welche bevorzugt im Bereich von 0,05 g/cm$^3$ bis 0,8 g/cm$^3$ liegt.

Die Füllschicht weist bevorzugt eine Dicke im Bereich von 1 mm bis 200 mm auf. Besonders bevorzugt liegt die Dicke im Bereich von 1 mm bis 180 mm, ganz besonders bevorzugt im Bereich von 2 mm bis 150 mm und am meisten bevorzugt im Bereich von 4 mm bis 100 mm.

Die Füllschicht weist bevorzugt eine Härte im Bereich von 10 Shore D bis 60 Shore D auf. Besonders bevorzugt liegt die Härte im Bereich von 20 Shore D bis 55 Shore D, ganz besonders bevorzugt im Bereich von 35 Shore D bis 45 Shore D und am meisten bevorzugt im Bereich von 30 Shore D bis 45 Shore D.

Deckschicht

Die Deckschicht schließt den Zylinder zur Außenseite ab und stellt die Oberfläche bereit, auf der weitere Zylinder aufgenommen werden können. Die Oberfläche der Deckschicht kann rau oder glatt ausgestaltet sein, vorzugsweise ist sie möglichst glatt, um ein einfaches Aufgleiten von Hohlzylindern zu ermöglichen. Bevorzugt ist die Deckschicht formstabil bzw. hart.

Bevorzugt ist das Material der Deckschicht ausgewählt aus der Gruppe umfassend Metalle, Keramik, unverstärkte Kunststoffe, verstärkte Kunststoffe und Kombinationen mehrerer dieser Materialien.

Beispiele für geeignete Kunststoffe für die Deckschicht, welche auch mit Fasern verstärkt sein können, umfassen Polyurethan, Epoxid, Polyester, Polyamid, Polyvinylester, Polyethylen, Polystyrol, Polyethylenterephthalat und Acrylnitril-Butadien-Styrol-Copolymer.

Die zur Verstärkung des Kunststoffs der Deckschicht verwendeten Fasern sind bevorzugt ausgewählt aus der Gruppe umfassend Glasfasern, Keramikfasern, Kohlenstofffasern und Kombinationen davon. Des Weiteren sind insbesondere die im Zusammenhang mit der Basisschicht beschriebenen Fasern geeignet.

Bevorzugt weist die Deckschicht ein Elastizitätsmodul im Bereich von 0,1 GPa bis 10 GPa auf. Besonders bevorzugt liegt das Elastizitätsmodul im Bereich von 0,5 GPa bis 8 GPa, ganz besonders bevorzugt von 1 GPa bis 7 GPa und am meisten bevorzugt von 1 GPa bis 5 GPa.

Die Dicke der Deckschicht liegt bevorzugt im Bereich von 0,1 mm bis 50 mm. Besonders bevorzugt liegt die Dicke im Bereich von 0,5 mm bis 30 mm, ganz besonders bevorzugt von 0,7 mm bis 20 mm und am meisten bevorzugt im Bereich von 1 mm bis 15 mm.

Bevorzugt weist die Deckschicht eine Härte im Bereich von 60 Shore D bis 99 Shore D auf. Besonders bevorzugt liegt die Härte im Bereich von 70 Shore D bis 95 Shore D, ganz besonders bevorzugt im Bereich von 80 Shore D bis 95 Shore D und am meisten bevorzugt im Bereich von 85 Shore D bis 95 Shore D.

Schichtstruktur

Die einzelnen Schichten der Schichtstruktur des Zylinders grenzen bevorzugt direkt aneinander an. Alternativ dazu kann vorgesehen sein, zwischen zwei Schichten einen Haftvermittler oder einen Klebstoff anzuordnen, um die Haftung zwischen den Schichten zu verbessern.

In der Schichtstruktur ist es bevorzugt, die Dicken der einzelnen Schichten derart zu wählen, dass das Verhältnis zwischen Summe der Dicken aus der Basisschicht, den Zwischenschichten und der Deckschicht zur Summe der Dicken der kompressiblen Schichten im Bereich von 0,01 bis 400 und besonders bevorzugt im Bereich von 0,1 bis 100 liegt. Zusätzlich oder alternativ ist es bevorzugt, das Verhältnis der Dicke der ersten kompressiblen Schicht zur zweiten Kompressiblen Schicht im Bereich von 0,1 bis 10 und besonders bevorzugt im Bereich von 0,3 bis 3 zu wählen.

Bevorzugt sind die Härten der ersten kompressiblen Schicht und der zweiten kompressiblen Schicht derart gewählt, dass diese Schichten weicher sind als die Basisschicht bzw. der Zylinderkern, die Zwischenschichten und die Deckschicht.

Bevorzugt ist die Härte der kompressiblen Schichten kleiner als die Härte der Füllschicht, die Härte der Füllschicht ist kleiner oder gleich der Härte der Basisschicht bzw. des Zylinderkerns und der Zwischenschichten und die Deckschicht kann die größte Härte aller Schichten aufweisen. Die härtesten Schichten sind bevorzugt die faserverstärkten Schichten.

Der vorgeschlagene Zylinder mit der vorgeschlagenen Schichtstruktur weist gute Schwingungseigenschaften auf. Für die Schwingungseigenschaften des Zylinders sind die Frequenzen, bei denen Resonanzen auftreten, sowie deren Stärke wichtig. Des Weiteren sind die Dämpfungseigenschaften des Zylinders wichtig, so dass Schwingungen des Zylinders stark gedämpft und somit deren Amplitude begrenzt werden und der Zylinder für den Einsatz bei hohen Druckgeschwindigkeiten geeignet ist. Des Weiteren weist der Zylinder bevorzugt keine Resonanzen mit einer Frequenz auf, welche im Druckbetrieb angeregt werden können.

Liegt eine Resonanz eines Zylinders unterhalb von 600 Hz ist eine Auslenkung der Schwingung des Zylinders für Druckgeschwindigkeiten von 500 m/min oder mehr erfahrungsgemäß so groß, dass diese im Druck zu sehen ist. Um hohe Druckgeschwindigkeiten zu ermöglichen, weisen Resonanzen des Zylinders bevorzugt eine Frequenz auf, welche größer als 900 Hz ist.

Des Weiteren weist der Zylinder eine starke Dämpfung von auf den Zylinder einwirkenden Stößen auf. Dabei ist es bevorzugt, wenn resonante Schwingungen des Zylinders bei einer Anregung mit einem Prüfhammer mit einer Masse von 390 g, einer Länge zum Drehpunkt von 245 mm und einer Auslenkung von 30° höchstens einen Beschleunigungswert von 3 m/s$^2$ aufweisen.

Schwingungen des Zylinders klingen aufgrund von Dämpfung exponentiell ab. Eine Einhüllende einer Schwingung A(t) des Zylinders, welche das Abklingverhalten beschreibt, kann somit durch die Gleichung

$$A(t) = A_0 e^{-dt}$$

Beschrieben werden, wobei $A_0$ die Amplitude der Schwingung zur Zeit t=0 und d die Abklingkonstante ist. Der Zylinder ist dabei bevorzugt derart ausgestaltet, dass die Abklingkonstante d einen Wert von 0,15 < d < 0,95 aufweist.

Ist die Abklingkonstante d kleiner als 0,15 sind im Drucktest Resonanzen bei bestimmten Geschwindigkeiten zu erkennen. Ist d größer als 0,95 ist zu beobachten, dass ein als Adapterhülse ausgestalteter Zylinder mit steigender Geschwindigkeit mehr Schwingungen aufweist.

Ein weiterer Aspekt der Erfindung betrifft eine Anordnung umfassend einen der hierin beschriebenen Hohlzylinder sowie mindestens einen weiteren der hierin beschriebenen Hohlzylinder, welcher auf der Mantelfläche des Holzylinders angeordnet ist. Zusätzlich oder alternativ zu einem auf der Mantelfläche des Holzylinders angeordneten weiteren Hohlzylinder kann einer der beschriebenen Druckformzylinder oder ein zusätzlicher der hierin beschriebenen Hohlzylinder im Inneren des Holzylinders angeordnet sein.

Des Weiteren betrifft die Erfindung eine Anordnung, bei der eine Druckhülse auf der Mantelfläche eines der hierin beschriebenen Zylinder oder auf der Mantelfläche des äußersten Zylinders der hierin beschriebenen Anordnung angeordnet ist

Beispiele für erfindungsgemäße Anordnungen umfassen insbesondere eine Anordnung mit einem Druckformzylinder, einer darauf angeordneten Adapterhülse und einer darauf angeordneten Druckhülse. Weitere Beispiele umfassen eine Adapterhülse mit einer darauf angeordneten Drückhülse und einen Druckformzylinder mit darauf angeordneter Adapterhülse.

Kurze Beschreibung der Figuren

Es zeigen:

Figur 1     einen Hohlzylinder mit einer Schichtstruktur in einer Schnittansicht,
Figur 2     eine schematische Darstellung einer Messanordnung zum Ermitteln des Schwingungsverhaltens eines (Hohl)Zylinders,

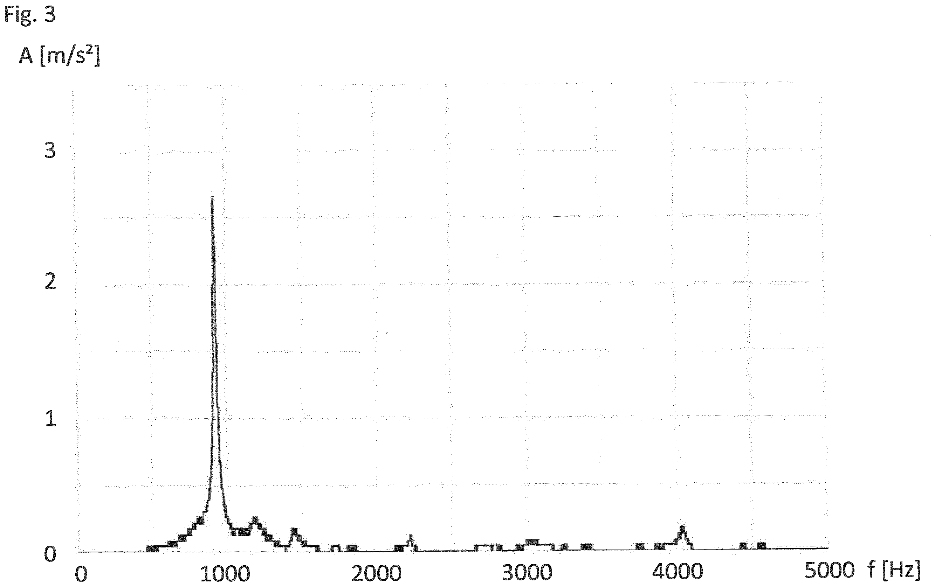

Figur 3     ein Spektrum der Schwingungen eines (Hohl)Zylinders,
Figur 4     ein Diagramm des Abklingverhaltens eines ersten (Hohl)Zylinders und
Figur 5     ein Diagramm des Abklingverhaltens eines zweiten (Hohl)Zylinders.

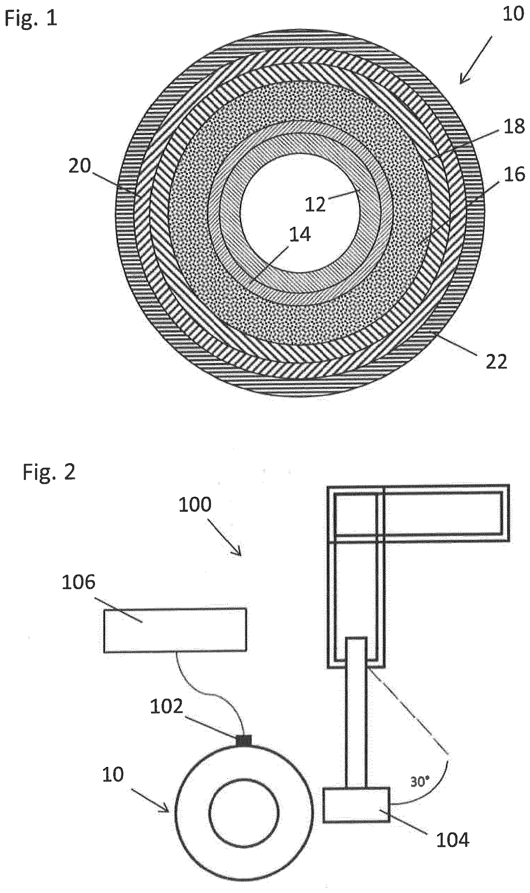

Figur 1 zeigt einen als Hohlzylinder ausgeführten Zylinder 10. Der Zylinder 10 weist eine Schichtstruktur auf, welche in dieser Reihenfolge von innen nach außen eine Basissicht 12, eine erste kompressible Schicht 14, eine Füllschicht 16, eine Zwischenschicht 18, eine zweite kompressible Schicht 20 und eine Deckschicht 22 aufweist.

In weiteren Ausführungsformen kann der Zylinder 10 auch als Vollzylinder ausgestaltet sein, wobei dann anstelle der Basisschicht 12 ein Zylinderkern eingesetzt wird. Des Weiteren können jeweils zwischen der ersten kompressiblen Schicht und der Füllschicht und zwischen der zweiten kompressiblen Schicht und der Deckschicht optional weitere Zwischenschichten angeordnet werden.

Figur 2 zeigt eine Messanordnung 100 zum Untersuchen des Schwingungsverhaltens eines Zylinders 10. Das Schwingungsverhalten des Zylinders 10 ist dabei insbesondere durch die Frequenzen bestimmt, bei denen Resonanzen auftreten. Des Weiteren ist die jeweilige Stärke einer Resonanz für die Eigenschaften des Zylinders wichtig.

Zum Bestimmen der Position, also der Frequenz einer Resonanz, und deren Stärke wird der zu untersuchende Zylinder 10 in die Messanordnung 100 eingesetzt. Dabei wird ein Messsensor 102 an dem Zylinder 10 befestigt. Die Messanordnung 100 umfasst des Weiteren einen Hammer 104 zur kontrollierten Anregung des Zylinders 10 mit einem definierten Stoß.

Der Messsensor 102 ist beispielsweise als Beschleunigungssensor ausgestaltet und ist eingerichtet, nach einem Stoß im Zylinder 10 angeregte Schwingungen zu messen. Die Messdaten des Messsensors 102 werden dazu an eine Messeinheit 106 übertragen und dort gespeichert und ausgewertet.

Beispiele:

Pendelschlagversuche

Für eine Messung unter Verwendung der mit Bezug zur Figur 2 beschriebenen Messanordnung 100 wird ein als Adapterhülse ausgestalteter Hohlzylinder auf einen passenden Stahlzylinder aufgeschoben. Der Messsensor 102 wird bei ¼ der Länge des Adapters bei 12 Uhr, also an der Oberseite, befestigt. An der gleichen Längenposition erfolgt bei 3 Uhr, also 90° zum Messsensor 102 versetzt, ein Anschlag mit dem Hammer 104. Dieser würde die Messung beeinflussen. Der Hammer 104 hat eine Masse von 390g und eine Länge zum Drehpunkt von 245 mm. Für einen definierten Stoß auf den Zylinder 10 wird der Hammer 104 um 30 Grad ausgelenkt und dann freigegeben. Der Kopf des Hammers 104 besteht aus Hartkunstoff, damit der zu messende Zylinder 10 nicht beschädigt wird.

Die folgenden Versuche wurden mit dem Messgerät VIBXpertII mit der Software Omnitrend Version 2.91 (DB Prüftechnik) und dem passenden Messsensor IPC100mV/g (DB Prüftechnik) ausgeführt, wobei der Messsensor mit Wachs auf dem zu untersuchenden Zylinder befestigt wird.

Die Messung der Resonanzfrequenzen erfolgt durch ein Erfassen des zeitlichen Verlaufs der vom Messsensor 102 gemessenen Beschleunigung durch den Hammerschlag. Das zeitliche Signal wird anschließend durch die Messeinheit 106 einer Frequenzanalyse unterzogen, beispielsweise mittels Fourier-Transformation oder numerischer Transformationen.

Die Resonanzen des Zylinders werden über eine Fünffachmessung im Frequenzbereich von 2 Hz bis 6400 Hz mit einer Auflösung von 0,25 Hz über einen Anschlagtest gemessen. Der zeitliche Verlauf bzw. das Abklingen der Schwingungen wird mit einer Einfachmessung über den ganzen Frequenzbereich von 1 Hz bis 10000 Hz mit einer Abtastrate von 65,5kHz und über einen Zeitraum von 450ms über die Beschleunigungsmessung gemessen.

Beim zeitlichen Verlauf wird betrachtet, wie schnell die Schwingung abklingt. Hierzu werden die Messwerte des zeitlichen Verlaufs ausgewertet.

An die Messwerte selbst wird die einhüllende Exponentialfunktion

$$A(t) = A_0 e^{-dt}$$

durch Kurvenanpassung angepasst. Hierbei ist die Amplitude $A_0$ die maximale Beschleunigung bei der Zeit t = 0. Die Abklingkonstante d bestimmt, wie schnell die Exponentialfunktion abfällt, wobei die Exponentialfunktion mit größerem d schneller abfällt. Je kleiner $A_0$ ist und je schneller die Exponentialfunktion abfällt je höher ist die Dämpfung im Zylinder.

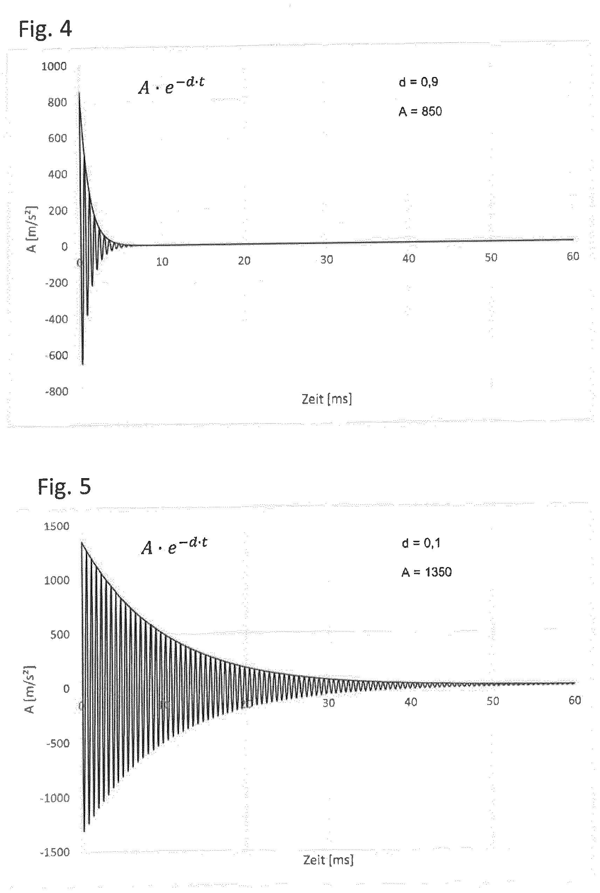

In den Figuren 4 und 5 sind Beispiele für Beschleunigungsmessungen im Zeitbereich dargestellt. Auf der Y-Achse ist jeweils die Beschleunigung A in m/s$^2$ und auf der X-Achse die Zeit t in ms aufgetragen.

Figur 4 zeigt ein erstes Beispiel einer Beschleunigungsmessung an einem ersten als Adapterhülse ausgestalteten Zylinder. Die erste Adapterhülse weist eine hohe Abklingkonstante d von 0,9 auf und die gemessene Beschleunigung zum Startzeitpunkt der Messung betrug 850 m/s$^2$.

Figur 5 zeigt ein zweites Beispiel einer Beschleunigungsmessung an einem zweiten als Adapterhülse ausgestalteten Zylinder. Die zweite Adapterhülse weist eine hohe Abklingkonstante d von 0,1 auf und die gemessene Beschleunigung zum Startzeitpunkt der Messung betrug 1350 m/s$^2$.

Wie der Darstellung der Figuren 4 und 5 entnommen werden kann, klingt die Schwingung der ersten Adapterhülse aufgrund der größeren Abklingkonstante d rascher ab als bei der zweiten Adapterhülse.

Druckversuche

Weiterhin wurden die hergestellten Zylinder auf einer Druckmaschine getestet und das erhaltene Druckbild ausgewertet. Dazu wurde eine Soma Optima 2 Druckmaschine ausgerüstet mit Coronabehandlung (Soma spol. s r.o.), Flexcell NX Druckplatten mit einer Dicke von 1,12 mm (Kodak) und FlexPrint MV magenta Farbe (Flint Group), BOPP mit 20 μm Dicke und 1300 mm Breite verwendet. Bei Druckgeschwindigkeiten von 375 m/min und 500 m/min wurde das Druckergebnis beurteilt. Dabei sollte das Druckergebnis insgesamt gut sein und zusätzlich nur geringe Unterschiede zwischen Bahnmitte und Bahnrändern auftreten. Bei stark schwingenden Zylindern wurden große Unterschiede zwischen Mitte und Rand beobachtet. Gute Ergebnisse (geringe Schwingungen) werden mit + beurteilt, Schlechte mit -, Ergebnisse dazwischen mit 0.

Für die nachfolgend in der Tabelle 2 aufgeführten Messungen wurden verschiedene erfindungsgemäße Zylinder und Vergleichsbeispiele mit unterschiedlichen Schichtfolgen hergestellt und entsprechend oben beschriebener Messung und Auswertung untersucht. Tabelle 1 beschreibt deren Aufbau.

Dabei bezeichnet die Abkürzung PEUK einen Polyester-Urethan-Kautschuk mit einer Dichte von ca. 400 kg/m3, einer Zugfestigkeit von > 3,5 N/mm$^2$ und einer Reißdehnung von >330%. Die Abkürzung GFK =bezeichnet ein Glasfaserverstärktes Polyesterharz und CFK bezeichnet ein Kohlefaserverstärktes Polyesterharz.

Tabelle 1

| Adapter Nr. | Hohl | Basisschicht | 1.kompressible Schicht | 1. weitere Zwischenschicht | Füllschicht | Zwischenschicht | 2. kompressible Schicht | 2. weitere Zwischenschicht | Deckschicht |
|---|---|---|---|---|---|---|---|---|---|
| Beispiel 1 | nein | 1 mm GFK | 2 mm PEUK | 1,2 mm GFK | 13 mm PU Schaum | 0,4 mm GFK | 3 mm PEUK | 4,8 mm CFK | 1 mm PU |
| Beispiel 2 | nein | 1 mm GFK | 2 mm PEUK | 1,2 mm GFK | 16 mm PU Schaum | 1,2 mm GFK | 3 mm PEUK | 1,2 mm GFK | 1,5 mm PU |
| Beispiel 3 | ja | 1 mm GFK | 2 mm PEUK | 1,2 mm GFK | 16 mm PU Schaum | 1,2 mm GFK | 1 mm PEUK | 4,8 mm CFK | 2 mm PU |
| Beispiel 4 | ja | 1 mm GFK | 2 mm PEUK | 1,2 mm GFK | 15 mm PU Schaum | 1,2 mm GFK | 2 mm PEUK | 4,8 mm CFK | 2 mm PU |
| Beispiel 5 | nein | 1 mm GFK | 2 mm PEUK | - | 16 mm PU Schaum | 1,2 mm GFK | 3 mm PEUK | - | 1,5 mm PU |
| Beispiel 6 | nein | 1 mm GFK | 2 mm PEUK | 1,2 mm GFK | 16 mm PU Schaum | 1,2 mm GFK | 3 mm PEUK | - | 1,5 mm PU |
| Vergleich 1 | nein | 1 mm GFK | 3 mm PEUK | 1,2 mm GFK | 12 mm PU Schaum | 0,4 mm GFK | - | 4,8 mm CFK | 1 mm PU |
| Vergleich 2 | ja | 1 mm GFK | 3 mm PEUK | 1,2 mm GFK | 12 mm PU Schaum | - | - | 4,8 mm CFK | 1 mm PU |
| Vergleich 3 | nein | 1 mm GFK | 1 mm PEUK | 1,5 mm GFK | 16 mm PU Schaum | 0,4 mm GFK | - | 4,8 mm CFK | 1 mm PU |
| Vergleich 4 | nein | 1 mm GFK | 2 mm PEUK | 1,2 mm GFK | 15 mm PU Schaum | 0,4 mm GFK | - | 4,8 mm CFK | 1 mm PU |

Tabelle 2:

| Zylinder Nr. | Zeitverlauf Beschleunigung bei ¼ der Länge | | Druckergebnisse | |
|---|---|---|---|---|
| | d | A | 375m/min | 500m/min |
| Beispiel 1 | 0,9 | 850 | + | + |
| Beispiel 2 | 0,65 | 600 | + | + |
| Beispiel 3 | 0,2 | 1100 | + | + |
| Beispiel 4 | 0,16 | 1050 | | |
| Beispiel 5 | 0,92 | 400 | | |
| Beispiel 6 | 0,58 | 250 | | |
| Vergleich 1 | 1,05 | 750 | - | - |
| Vergleich 2 | 0,07 | 1100 | - | - |
| Vergleich 3 | 1,8 | 550 | - | - |
| Vergleich 4 | 1,9 | 800 | - | - |

Bezugszeichenliste

10   Zylinder
12   Basisschicht
14   erste kompressible Schicht
16   Füllschicht
18   Zwischenschicht
20   zweite kompressible Schicht
22   Deckschicht

100   Messanordnung
102   Messsensor
104   Hammer
106   Messeinheit

**Patentansprüche**

1. Zylinder (10), eingerichtet zum Aufbringen von mindestens einem Hohlzylinder, wobei der Zylinder (10) eine Schichtstruktur aufweist, die in dieser Reihenfolge von innen nach außen

   - eine Basisschicht (12) oder einen Zylinderkern,
   - eine erste kompressible Schicht (14),
   - eine Füllschicht (16),
   - eine Zwischenschicht (18),
   - eine zweite kompressible Schicht (20) und
   - eine Deckschicht (22)

   umfasst, wobei die Deckschicht (22) eine Mantelfläche des Zylinders (10) bildet.

2. Zylinder (10) nach Anspruch 1, **dadurch gekennzeichnet, dass** der Zylinder (10) mindestens eine weitere Zwischenschicht aufweist, wobei die mindestens eine weitere Zwischenschicht zwischen der ersten kompressiblen Schicht (14) und der Füllschicht (16) und/oder zwischen der zweiten kompressiblen Schicht (20) und der Deckschicht (22) angeordnet ist.

3. Zylinder (10) nach Anspruch 1 oder 2, **dadurch gekennzeichnet, dass** der Zylinder (10) mindestens einen in einer oder mehreren Schichten des Zylinders (10) angeordneten Kanal umfasst, welcher mit Öffnungen auf der Mantelfläche des Zylinders (10), und/oder mit Öffnungen oder Anschlüssen an einer Stirnseite des Zylinders (10), und/oder, falls der Zylinder (10) als ein Hohlzylinder mit einer Basisschicht (12) ausgebildet ist, mit Öffnungen an einer Innenseite oder an einer Stirnseite des Hohlzylinders verbunden ist.

4. Zylinder (10) nach Anspruch 3, **dadurch gekennzeichnet, dass** der mindestens eine Kanal in der Füllschicht (16) angeordnet ist.

5. Zylinder (10) nach einem der Ansprüche 1 bis 4, **dadurch gekennzeichnet, dass** das Material der Basisschicht (12), der Zwischenschicht (18) und/oder, sofern vorhanden, der mindestens einen weiteren Zwischenschicht ein faserverstärkter Kunststoff ist.

6. Zylinder (10) nach einem der Ansprüche 1 bis 5, **dadurch gekennzeichnet, dass** die Basisschicht (12), die Zwischenschicht (18) und/oder, sofern vorhanden, die mindestens eine weitere Zwischenschicht eine Dicke im Bereich von 0,5 mm bis 5 mm aufweist.

7. Zylinder (10) nach einem der Ansprüche 1 bis 6, **dadurch gekennzeichnet, dass** die erste kompressible Schicht (14) und/oder die zweite kompressible Schicht (20) eine Dicke im Bereich von 0,1 mm bis 10 mm aufweist.

8. Zylinder (10) nach einem der Ansprüche 1 bis 7, **dadurch gekennzeichnet, dass** das Verhältnis zwischen der Summe der Dicken aus der Basisschicht (12), der Zwischenschicht (18), sofern vorhanden, der mindestens einen weiteren Zwischenschicht, und der Deckschicht (22) zur Summe der Dicken der kompressiblen Schichten (14, 20) im Bereich von 0,01 bis 400 liegt.

9. Zylinder (10) nach einem der Ansprüche 1 bis 8, **dadurch gekennzeichnet, dass** das Verhältnis der Dicke der ersten kompressiblen Schicht (14) zur Dicke der zweiten kompressiblen Schicht (20) im Bereich von 0,1 bis 10 liegt.

10. Zylinder (10) nach einem der Ansprüche 1 bis 9, **dadurch gekennzeichnet, dass** die Füllschicht (16) eine Dicke im Bereich von 1 mm bis 200 mm aufweist.

11. Zylinder (10) nach einem der Ansprüche 1 bis 10, **dadurch gekennzeichnet, dass** die Deckschicht (22) eine Dicke im Bereich von 0,1 mm bis 50 mm aufweist.

12. Zylinder (10) nach einem der Ansprüche 1 bis 11, **dadurch gekennzeichnet, dass** die Schichtstruktur so angeordnet ist, dass bei einer Anregung mit einem Prüfhammer (104) mit einer Masse von 390 g, einer Länge zum Drehpunkt von 245 mm und einer Auslenkung von 30° resonante Schwingungen des Zylinders (10) höchstens einen Beschleunigungswert von 3 m/s$^2$ aufweisen.

13. Zylinder (10) nach einem der Ansprüche 1 bis 12, **dadurch gekennzeichnet, dass** die Schichtstruktur so angeordnet ist, dass Schwingungen des Zylinders (10) exponentiell abklingen, wobei eine Abklingkonstante d einen Wert von 0,15<d<0,95 aufweist.

14. Zylinder (10) nach einem der Ansprüche 1 bis 13, **dadurch gekennzeichnet, dass** der Zylinder (10) als Druckformzylinder ausgestaltet ist.

15. Zylinder (10) nach einem der Ansprüche 1 bis 13, **dadurch gekennzeichnet, dass** der Zylinder als Adapterhülse oder als Druckhülse ausgestaltet ist, so dass der Zylinder ein Hohlzylinder ist, wobei die Basisschicht eine Innenseite aufweist, die den Hohlzylinder begrenzt.

16. Anordnung umfassend einen Hohlzylinder gemäß Anspruch 15 sowie mindestens einen weiteren Hohlzylinder, welcher auf der Mantelfläche des Holzylinders angeordnet ist, wobei zusätzlich oder alternativ zu einem auf der Mantelfläche des Hohlzylinders angeordneten weiteren Hohlzylinder ein Druckformzylinder nach Anspruch 14 oder ein weiterer Hohlzylinder nach Anspruch 15 im Inneren des Holzylinders angeordnet ist.

17. Anordnung, **dadurch gekennzeichnet, dass** eine als Holzylinder ausgestaltete Druckhülse auf der Mantelfläche eines Zylinders (10) nach Anspruch 14 oder 15 oder auf der Mantelfläche des äußersten Zylinders (10) der Anordnung nach Anspruch 16 angeordnet ist.

**Claims**

1. Cylinder (10) set up for applying at least one hollow cylinder, wherein the cylinder (10) has a layer structure which comprises, in this order, from the inside to the outside

   - a base layer (12) or a cylinder core,
   - a first compressible layer (14),
   - a filling layer (16),
   - an intermediate layer (18),
   - a second compressible layer (20) and
   - a cover layer (22)

   wherein the cover layer (22) forms a lateral surface of the cylinder (10).

2. Cylinder (10) according to claim 1, **characterised in that** the cylinder (10) has at least one further intermediate layer, the at least one further intermediate layer being arranged between the first compressible layer (14) and the filling layer (16) and/or between the second compressible layer (20) and the cover layer (22).

3. Cylinder (10) according to either claim 1 or claim 2, **characterised in that** the cylinder (10) comprises at least one channel which is arranged in one or more layers of the cylinder (10) and which is connected to openings on the lateral surface of the cylinder (10) and/or to openings or connections on an end face of the cylinder (10) and/or, if the cylinder (10) is designed as a hollow cylinder having a base layer (12), to openings on an inner side or on an end face of the hollow cylinder.

4. Cylinder (10) according to claim 3, **characterised in that** the at least one channel is arranged in the filling layer (16).

5. Cylinder (10) according to any of claims 1 to 4, **characterised in that** the material of the base layer (12), the intermediate layer (18) and/or, if present, the at least one further intermediate layer is a fibre-reinforced plastics material.

6. Cylinder (10) according to any of claims 1 to 5, **characterised in that** the base layer (12), the intermediate layer (18) and/or, if present, the at least one further intermediate layer has a thickness in the range of 0.5 mm to 5 mm.

7. Cylinder (10) according to any of claims 1 to 6, **characterised in that** the first compressible layer (14) and/or the second compressible layer (20) has a thickness in the range of 0.1 mm to 10 mm.

8. Cylinder (10) according to any of claims 1 to 7, **characterised in that** the ratio between the sum of the thicknesses from the base layer (12), the intermediate layer (18), if present, the at least one further intermediate layer, and the cover layer (22) and the sum of the thicknesses of the compressible layers (14, 20) is in the range of 0.01 to 400.

9. Cylinder (10) according to any of claims 1 to 8, **characterised in that** the ratio of the thickness of the first compressible layer (14) to the thickness of the second compressible layer (20) is in the range of 0.1 to 10.

10. Cylinder (10) according to any of claims 1 to 9, **characterised in that** the filling layer (16) has a thickness in the range of 1 mm to 200 mm.

11. Cylinder (10) according to any of claims 1 to 10, **characterised in that** the cover layer (22) has a thickness in the range of 0.1 mm to 50 mm.

12. Cylinder (10) according to any of claims 1 to 11, **characterised in that** the layer structure is arranged in such a way that when excited with a test hammer (104) having a mass of 390 g, a length to the centre of rotation of 245 mm and a deflection of 30°, resonant vibrations of the cylinder (10) have at most an acceleration value of 3 m/s$^2$.

13. Cylinder (10) according to any of claims 1 to 12, **characterised in that** the layer structure is arranged in such a way that vibrations of the cylinder (10) decay exponentially, a decay constant d having a value of 0.15<d<0.95.

14. Cylinder (10) according to any of claims 1 to 13, **characterised in that** the cylinder (10) is designed as a plate-bearing cylinder.

**15.** Cylinder (10) according to any of claims 1 to 13, **characterised in that** the cylinder is designed as an adapter sleeve or as a pressure sleeve, so that the cylinder is a hollow cylinder, the base layer having an inner side that delimits the hollow cylinder.

**16.** Arrangement comprising a hollow cylinder according to claim 15 and at least one further hollow cylinder which is arranged on the lateral surface of the hollow cylinder, wherein, in addition to or alternatively to a further hollow cylinder arranged on the lateral surface of the hollow cylinder, a plate-bearing cylinder according to claim 14 or a further hollow cylinder according to claim 15 is arranged in the interior of the wooden cylinder.

**17.** Arrangement, **characterised in that** a pressure sleeve designed as a hollow cylinder is arranged on the lateral surface of a cylinder (10) according to claim 14 or claim 15 or on the lateral surface of the outermost cylinder (10) of the arrangement according to claim 16.

**Revendications**

**1.** Cylindre (10) mis au point pour appliquer au moins un cylindre creux, dans lequel le cylindre (10) présente une structure stratifiée, qui comprend dans l'ordre qui suit de l'intérieur vers l'extérieur

- une couche de base (12) ou une partie centrale de cylindre,
- une première couche compressible (14),
- une couche de remplissage (16),
- une couche intermédiaire (18),
- une deuxième couche compressible (20), et
- une couche de recouvrement (22),

dans lequel la couche de recouvrement (22) forme une surface enveloppante du cylindre (10).

**2.** Cylindre (10) selon la revendication 1, **caractérisé en ce que** le cylindre (10) présente au moins une autre couche intermédiaire, dans lequel l'au moins une autre couche intermédiaire est disposée entre la première couche compressible (14) et la couche de remplissage (16) et/ou entre la deuxième couche compressible (20) et la couche de recouvrement (22).

**3.** Cylindre (10) selon la revendication 1 ou 2, **caractérisé en ce que** le cylindre (10) comprend au moins un canal disposé dans une ou dans plusieurs couches du cylindre (10), lequel est relié à des ouvertures sur la surface enveloppante du cylindre (10), et/ou à des ouvertures ou des raccords sur un côté frontal du cylindre (10), et/ou, si le cylindre (10) est réalisé en tant qu'un cylindre creux avec une couche de base (12), à des ouvertures sur un côté intérieur ou sur un côté frontal du cylindre creux.

**4.** Cylindre (10) selon la revendication 3, **caractérisé en ce que** l'au moins un canal est disposé dans la couche de remplissage (16).

**5.** Cylindre (10) selon l'une quelconque des revendications 1 à 4, **caractérisé en ce que** le matériau de la couche de base (12), de la couche intermédiaire (18) et/ou, si disponible, de l'au moins une autre couche intermédiaire est une matière plastique renforcée par des fibres.

**6.** Cylindre (10) selon l'une quelconque des revendications 1 à 5, **caractérisé en ce que** la couche de base (12), la couche intermédiaire (18) et/ou, si disponible, l'au moins une autre couche intermédiaire présentent une épaisseur dans la plage de 0,5 mm à 5 mm

**7.** Cylindre (10) selon l'une quelconque des revendications 1 à 6, **caractérisé en ce que** la première couche compressible (14) et/ou la deuxième couche compressible (20) présentent une épaisseur dans la plage de 0,1 mm à 10 mm

**8.** Cylindre (10) selon l'une quelconque des revendications 1 à 7, **caractérisé en ce que** le rapport entre la somme des épaisseurs de la couche de base (12), de la couche intermédiaire (18), si disponible, de l'au moins une autre couche intermédiaire, et de la couche de recouvrement (22) par rapport à la somme des épaisseurs de couches compressibles (14, 20) se situe dans la plage de 0,01 à 400.

**9.** Cylindre (10) selon l'une quelconque des revendications 1 à 8, **caractérisé en ce que** le rapport de l'épaisseur de la première couche compressible (14) par rapport à l'épaisseur de la deuxième couche compressible (20) se situe dans la plage de 0,1 à 10.

**10.** Cylindre (10) selon l'une quelconque des revendications 1 à 9, **caractérisé en ce que** la couche de remplissage (16) présente une épaisseur dans la plage de 1 mm à 200 mm.

**11.** Cylindre (10) selon l'une quelconque des revendications 1 à 10, **caractérisé en ce que** la couche de recouvrement (22) présente une épaisseur dans la plage de 0,1 mm à 50 mm.

**12.** Cylindre (10) selon l'une quelconque des revendications 1 à 11, **caractérisé en ce que** la structure stratifiée est disposée de telle sorte que lors d'une excitation avec un scléromètre (104) avec un poids de 390 g, une longueur par rapport au point de rotation de 245 mm et une déviation de 30°, des vibrations résonantes du cylindre (10) présentent au maximum une valeur d'accélération de 3 m/s$^2$.

**13.** Cylindre (10) selon l'une quelconque des revendications 1 à 12, **caractérisé en ce que** la structure stratifiée est disposée de telle sorte que des vibrations du cylindre (10) s'affaiblissent de manière exponentielle, dans lequel une constante d'affaiblissement d présente une valeur $0,15 < d < 0,95$.

**14.** Cylindre (10) selon l'une quelconque des revendications 1 à 13, **caractérisé en ce que** le cylindre (10) est configuré en tant que cylindre porte-plaque.

**15.** Cylindre (10) selon l'une quelconque des revendications 1 à 13, **caractérisé en ce que** le cylindre est configuré en tant que douille d'adaptateur ou en tant que douille de pression de sorte que le cylindre est un cylindre creux, dans lequel la couche de base présente un côté intérieur qui délimite le cylindre creux.

**16.** Ensemble comprenant un cylindre creux selon la revendication 15 ainsi qu'au moins un autre cylindre creux, lequel est disposé sur la surface enveloppante du cylindre creux, dans lequel en supplément en variante par rapport à un autre cylindre creux disposé sur la surface enveloppante du cylindre creux, un cylindre porte-plaque selon la revendication 14 ou un autre cylindre creux selon la revendication 15 est disposé dans l'intérieur du cylindre creux.

**17.** Ensemble, **caractérisé en ce qu'**une douille de pression configurée en tant que cylindre creux est disposée sur la surface enveloppante d'un cylindre (10) selon la revendication 14 ou 15 ou sur la surface enveloppante du cylindre (10) le plus externe de l'ensemble selon la revendication 16.

Fig. 1

Fig. 2

EP 3 698 969 B1

Fig. 3

## Fig. 4

$A \cdot e^{-d \cdot t}$

d = 0,9

A = 850

## Fig. 5

$A \cdot e^{-d \cdot t}$

d = 0,1

A = 1350

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1263592 B1
- WO 2017089221 A1
- DE 102014220850 A1
- EP 3189976 A2
- EP 2051856 A
- WO 2005110751 A1
- WO 2005111725 A1
- US 20040103976 A1
- WO 9936270 A
- US 5860360 A